(19) Europäisches Patentamt
European Patent Office
Office européen des brevets

(11) Publication number: 0 068 297
B1

(12) # EUROPEAN PATENT SPECIFICATION

(45) Date of publication of patent specification: 18.12.85

(21) Application number: 82105256.0

(22) Date of filing: 16.06.82

(51) Int. Cl.[4]: **A 01 N 65/00**, A 01 N 57/30, A 01 N 57/16, A 01 N 57/14, A 01 N 57/12 // (A01N57/30, 57:16, 57:14, 57:12, 57:12, 57:12, 57:12, 57:12, 57:12, 57:12, 57:12, 57:12, 57:12, 53:00, 47:22, 47:12, 43:24, 43:20, 33:18, 31:14)

(54) **A new insecticidal composition, processes for its production and its use.**

(30) Priority: **27.06.81 DE 3125423**

(43) Date of publication of application:
**05.01.83 Bulletin 83/01**

(45) Publication of the grant of the patent:
**18.12.85 Bulletin 85/51**

(84) Designated Contracting States:
**AT BE CH DE FR GB IT LI LU NL SE**

(56) References cited:
**GB-A-1 357 952**
**US-A-1 938 864**
**US-A-2 006 227**
**US-A-4 007 258**

**The file contains technical information submitted after the application was filed and not included in this specification**

(73) Proprietor: **A. Nattermann & Cie. GmbH**
**Nattermannallee 1**
**D-5000 Köln 30 (DE)**

(72) Inventor: **Ghyczy, Miklos, Dipl.-Chem., Dr.**
**Am Serviesberg 12**
**D-5000 Köln 41 (DE)**
Inventor: **Osthoff, Heinrich, Dr.**
**Rondorfer Strasse 51**
**D-5030 Hürth (DE)**
Inventor: **Etschenberg, Eugen, Dr.**
**Hirseweg 10**
**D-5000 Köln 41 (DE)**

(74) Representative: **Redies, Bernd, Dr. rer. nat.**
**COHAUSZ & FLORACK Patentanwaltsbüro**
**Schumannstrasse 97 Postfach 14 01 47**
**D-4000 Düsseldorf 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 068 297 B1

**Description**

This invention relates to a new insecticidal composition, to processes for its production and to its use.

In plant cultivation, numerous chewing and sucking insects cause serious production losses, particularly in the case of cotton, rice, cereal crops, potatoes, fruit, vegetables and vines. The now commonplace intensive cultivation in one-crop systems with highly productive crops is jointly responsible for the often rapid development and propagation of numerous injurious insects. Harvested crops also require protection against insect infestation during storage and transportation.

In order to control insects, it is now essential to use chemical insect control agents. A large number of chemical substances have been used for controlling insects. However, insecticides currently in use are still attended by some as yet unsolved problems. Chemical insecticides often have to be used in high concentrations and, as a result, can become a source of toxic pollution to the environment. The poor solubility of some insecticides, particularly in water, makes it necessary to use toxic organic solvents. In addition, most chemical insecticides cannot always develop their full activity because they do not adhere sufficiently to the plants to be protected. Accordingly, they have to be used in high concentrations so that a sufficiently large quantity of insecticide remains on the plant or in the treated soil for a sufficiently long period.

Another requirement is ease of handling both during production and also during application.

It has now surprisingly been found that the quantity of insecticide per hectare of cultivated area required for controlling insects can be reduced by up to 40—60% and, in some cases, by up to 80% providing the insecticidally active substance or the mixture of several insecticidally active substances is used in admixture with one or more de-oiled natural phospholipid products soluble in ethanol consisting of 25 to 96% of phosphatidyl choline or 96% of hydrogenated phosphatidyl choline and 25 to 0% of phosphatidyl ethanolamine, 20 to 0% of phosphatidyl inositol and the difference to 100% of one or several of N-acyl phosphatidyl ethanolamines, phosphatidyl serine, phosphatidyl glycerol and lysolecithin in ratio by weight of a:b from 1.0.5 to 1:10 in addition to standard vehicles, diluents, solvents, propellants and/or other inert auxiliaries. In addition, the new compositions show considerably better adhesion to the plants or stored produce to be protected. Furthermore, the addition of the phospholipides accelerates the uptake of the insecticide by the insects so that the quantity of insecticide required for protecting the plants can be considerably reduced. The reduction in the quantity of insecticide used not only improves the economy of the insecticide treatment, it also provides for less damage to the plants (reduction in phytotoxicity), for example by reducing the residues in the soil and in the plant, the latter also leading to a considerable reduction in the waiting time (insecticide treatment pending harvesting). Finally, the phospholipides are mostly natural and, in every case, non-toxic products which, by virtue of their nature and properties, do not themselves cause any pollution of the environment or have any adverse effect upon the waiting time. Some of the phospholipides are of course even used in foods.

To produce the new insecticidal compositions, the insecticides are mixed with the phospholipide in a ratio by weight of from 1:0 to 1:10 and, preferably, in a ratio by weight of from 1:1 to 1:5. In this connection, the weight of the phospholipide is based on substantially pure phospholipid.

Suitable phospholipides are; for example, the commercially available phosphatidyl cholines or phosphatidyl choline mixtures, such as for example

Phospholipon[R]25

(25% of phosphatidyl choline, 25% of Phosphatidyl ethanolamine, 20% of phosphatidyl inositol and the remaining 30% being composed of glycolipids, phosphatidic acids, lysophospholipids (such as lysolecithin), sugar and small amount of oil).

Phospholipon[R]55

(55% of phosphatidyl choline, 25% of phosphatidyl ethanolamine, 2% of phosphatidyl inositol and the remaining 18% being composed of glycolipids, phosphatidic acids, lysophospholipids (such as lysolecithin), sugar and small amount of oil).

Phospholipon[R]80

(80% of phosphatidyl choline, 10% of phosphatidyl ethanolamine, 2.5% of lysophosphatidyl choline (lysolecithin) and the remaining 7.5% being composed of other, naturally occuring phospholipids such as lysophosphatidyl ethanolamine, phosphatidyl inositol).

Phospholipon[R]100

(96% of phosphatidyl choline, ≤3% of lysophosphatidyl choline (lysolecithin), ≤1% soybean oil).

Phospholipon[R]100H

(96% of hydrogenated phosphatidyl choline, ≤3% of lysophosphatidyl choline (lysolecithin), ≤1% soybean oil).

Phospholipon[R]38

(38% of phosphatidyl choline, 16% of N-acetyl phosphatidyl ethanolamine and 4% of phosphatidyl ethanolamind).

It is particularly preferred to use natural phosphatidyl cholines which may be obtained by the processes described in the following patents: DE—PS No. 1,047,597, DE—PS No. 1,053,299, DE—PS No. 1,617,679, DE—PS No. 1,617,680, German Patent Applications DE—OS No. 30 47 048, DE—OS NO. 30 47 012 or DE—OS No. 30 47 011.

In these processes, for instance soybeans are extracted with a lower aliphatic alcohol, in particular with 94 to 96% ethanol, which is filtered. The clear solution may be evaporated and is redissolved in a lower aliphatic alcohol which may contain 20% water. This solution is subjected to column chromatography on silicic acid gel at an elevated temperature which is 60 to 90°C if highly concentrated phosphatidyl choline is desired and which is elevated to temperatures below 60°C, if a product is desired which is to contain varying amounts of phosphatidyl ethanolamine. In the latter case the soybean material is at first de-oiled by known processes, for instance in an acetone solution with subsequent extraction in ethanol or by chromatographic purification over aluminium oxide in ethanol (De—PS 1 047 517, 1 053 299, 1 617 679 or 1 617 680).

Particularly suitable N-acyl phosphatidyl ethanolamines are those in which the acyl group emanates from saturated or olefinically unsaturated fatty acids containing from 2 to 20 carbon atoms, particularly from saturated fatty acids containing from 2 to 5 carbon atoms of from saturated or mono-olefinically unsaturated fatty acids containing 14, 16, 18 or 20 carbon atoms.

The insecticide used may be virtually any insecticide, including the known chemical pesticides from the following groups:

1. Pyrethroids corresponding to the following general formula

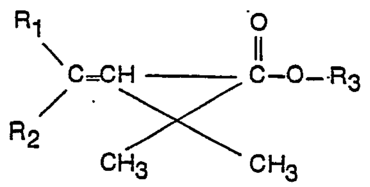

I

in which

$R_1$ represents $CH_3$, COOH, $COOCH_3$, Cl, Br

$R_2$ represents $CH_3$, Cl, Br,

$R_3$ represents substituted cyclopentene, substituted furyl methyl, phthalimidomethyl, phenoxy benzyl or phenalkenyl groups.

The following are examples of compounds corresponding to formula I:

| | $R_1$ | $R_2$ | $R_3$ | |
|---|---|---|---|---|
| 1. | $-CH_3$ | $-CH_3$ | 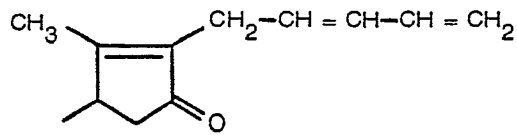 | pyrethrin I |
| 2. | $-COOCH_3$ | $-CH_3$. | 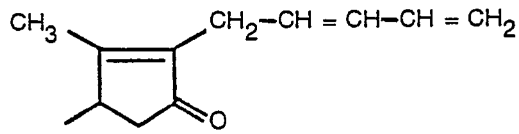 | pyrethrin II |
| 3. | $-CH_3$ | $-CH_3$ | 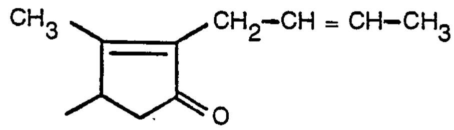 | cinerin I |
| 4. | $-COOCH_3$ | $-CH_3$ | 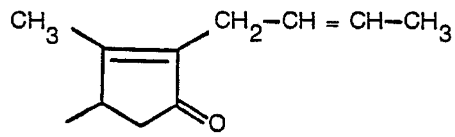 | cinerin II |
| 5. | $-CH_3$ | $-CH_3$ | 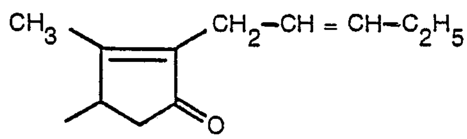 | jasmolin I |
| 6. | $-COOCH_3$ | $-CH_3$ | 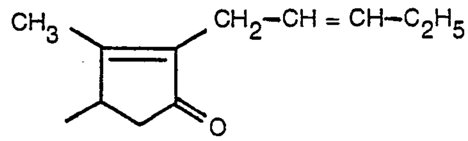 | jasmolin II |
| 7. | $-CH_3$ | $-CH_3$ | 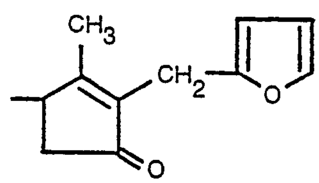 | furethrin |
| 8. | $-CH_3$ | $-CH_3$ | 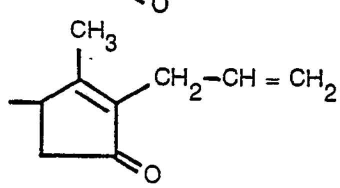 | allethrin |
| 9 | $-CH_3$ | $-CH_3$ | 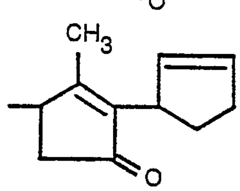 | cyclethrin |

| | $R_1$ | $R_2$ | $R_3$ | |
|---|---|---|---|---|
| 10. | $-CH_3$ | $-CH_3$ | 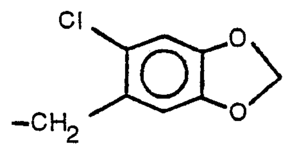 | bathrin |
| 11. | $-CH_3$ | $-CH_3$ | 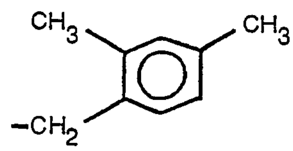 | dimethrin |
| 12. | $-CH_3$ | $-CH_3$ | 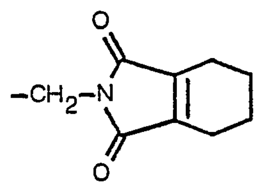 | phthalthrin |
| 13. | $-CH_3$ | $-CH_3$ | 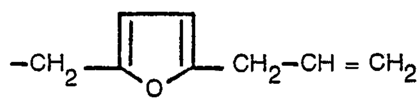 | japothrin |
| 14 | $-CH_3$ | $-CH_3$ | 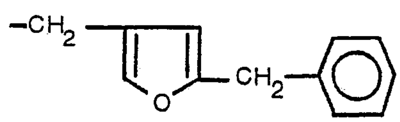 | pyrestrin |
| 15. | $-CH_3$ | $-CH_3$ | 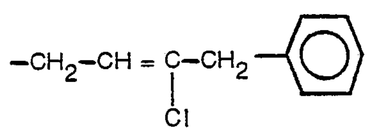 | butethrin |
| 16 | $-CH_3$ | $-CH_3$ | 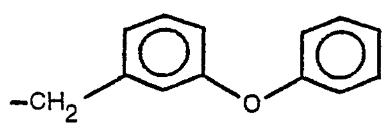 | penothrin |
| 17. | $-Cl$ | $-Cl$ | 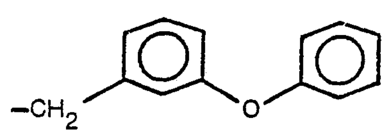 | permethrin |
| 18. | $-Br$ | $-Br$ | 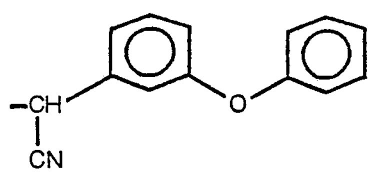 | decamethrin |

The compounds corresponding to formula I are known compounds which have already been successfully used as insecticides (*cf.* Chemie der Pflanzenschutz und Schadlingsbekampfungsmittel-Springer 1970, pages 87 *et seq.*).

The compounds corresponding to formula I are sparingly soluble in water, sensitive to heat and readily inactivated in air. Combinations of the compounds corresponding to formula I with phospholipides are distinguished in particular by the fact that stability to air and to temperature is considerably improved. In addition, it is possible to prepare aqueous solutions or emulsions without having to use potentially harmful organic solvents. The often unpleasant odour of the compounds is also weakened by the addition of phospholipides. The destruction of insects is considerably increased by addition of the phospholipides without any increase in toxicity with respect to warm-blooded animals. Combinations of permethrin or decamethrin with phospholipides are particularly preferred.

2. Chlorinated hydrocarbons corresponding to the following general formula

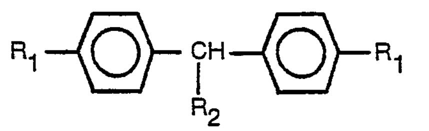

II

in which

$R_1$ represents halogen, particularly chlorine, methoxy, $C_1$—$C_3$-alkyl,

$R_2$ represents polychloroalkyl, nitroalkyl groups.

The following are examples of compounds corresponding to formula II:

2,2-bis-(p-chlorophenyl)-1,1,1-trichloroethane (DDT),
2,2-bis-(p-methoxyphenyl)-1,1,1-trichloroethane (methoxychlor),
2,2-bis-(p-fluorophenyl)-1,1,1-trichloroethane (DFDT),
2,2-bis-(p-chlorophenyl)-1,1,-dichloroethane (TDE),
2,2-bis-(p-ethylphenyl)-1,1-dichloroethane (perthane),
2-nitro-1,1-bis-(p-chlorophenyl)-butane (bulan),
2-nitro-1,1-bis-(p-chlorophenyl)-propane (prolan).

It is preferred to use mixtures of 2,2-bis-(p-chlorophenyl)-1,1,1-trichloroethane or 2,2-bis-(p-methoxyphenyl)-1,1,1-trichloroethane with phospholipides. The advantage of mixtures such as these is that the ability of the compounds to form complexes with the phospholipides enables water-soluble or readily emulsifiable mixtures to be produced without having to use potentially harmful organic solvents.

3. Polychlorocycloalkanes such as, for example,

γ-1,2,3,4,5,6-hexachlorocyclohexane (lindane),
1,2,4,5,6,7,8-octachloro-4,7-methano-3a,4,7,7a-tetrahydroindane (chlordane),
1,4,5,6,7-heptachloro-4,7-methano-3a,4,7,7a-tetrahydroindane (heptachlor),
2-exo-4,5,6,7,8,8-heptachloro-4,7-methano-3a,4,7,7a-tetrahydroindane (dihydroheptachlor),
1,3,4,5,6,7,10,10-octachloro-4,7-endomethylene-4,7,8,9-tetrahydrophthalane (isobenzan),
6,7,8,9,10,10-hexachloro-1,5,5a,6,9,9a-hexahydro-6,9-methano-2,4,3-benzodioxathiepine-3-oxide (endosulfan),
5,6-bis-(chloromethyl)-1,2,3,4,7,7-hexachlorobicyclo-2,2,1-hept-2-ene (alodan),
5-bromomethyl-1,2,3,4,7,7-hexachlorobicyclo-2,2,1-hept-2-ene (bromodan),
1,2,3,4,10,10-hexachloro-1,4,4a,5,8,8a-hexahydroendo-1,4-exo-5,8-dimethanonaphthalenes (aldrins),
1,2,3,4,10,10-hexachloro-6,7-epoxy-1,4,4a,5,6,7,8,8a-octahydroendo-1,4-oxo-5,8-dimethanonaphthalene (dieldrin),
1,2,3,4,10,10-hexachloro-6,7-epoxy-1,4,4a,5,6,7,8,8a-octahydroendo-1,4-endo-5,8-dimethanonaphthalene (endrin).

It is particularly preferred to use mixtures of lindane, aldrin, dieldrin or endrin with phospholipides. In addition to the distinct improvement of the result of the effect on insects, it is possible to prepare aqueous solutions or emulsions without having to use toxic solvents.

4. Phosphoric acid esters corresponding to the following general formula

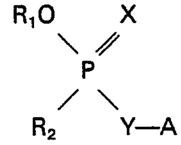

III

in which

X and Y, which may be the same or different, are oxygen or sulphur,

$R_1$ represents $C_1$—$C_4$-alkyl, particularly $CH_3$ or $C_2H_5$,

$R_2$ represents alkoxy, particularly methoxy or ethoxy, $C_1$—$C_4$-alkyl, particularly ethyl, or aminoalkyl, particularly amino-$C_1$—$C_4$-alkyl,

A represents either

a) $-(CH_2)_n-Z-R_3$ wherein n = 1—3, Z = S, SO or $SO_2$, $R_3$ represents linear or branched $C_1-C_4$-alkyl, substituted aryl, particularly phenyl substituted by chlorine, methyl or nitro, or a radical corresponding to general formula III or

b) chlorine, methyl or nitro-substituted phenyl, α-substituted benzyl, an alkenyl carboxylic acid ester group or an alkenyl carboxylic acid amide group or

c) a heteroaryl group such as, for example, a substituted pyridyl, pyrimidinyl, quinoxalyl, isocalyl, triazolyl, phthalyl, benztriazinyl, benzoxazolyl, thiadiazolyl or thiazinolyl group.

The compounds corresponding to general formula III are known compounds, such as for example:

O,O-diethyl-O-(ethylthio)-ethyl thiophosphate (demeton-O),
O,O-diethyl-S-(ethylthio)-ethyl thiophosphate (demeton-S),
O,O-dimethyl-S-(ethylthio)-ethyl thiophosphate,
O,O-diethyl-S-(2-ethylsulfonyl-1-methyl)-ethyl thiophosphate,
O,O-diethyl-O-(ethylsulfonyl)-ethyl-thiophosphate,
O,O-diethyl-S-(2-ethylthio)-ethyl dithiophosphate (disulfoton),
O,O-dimethyl-S-(2-ethylthio)-ethyl dithiophosphate,
O,O-diethyl-S-(2-ethylthio)-methyl dithiophosphate (phorat),
O,O-diethyl-S-(tert.-butylthio)-methyl dithiophosphate (terbufos),
O,O-diethyl-S-[(4-chlorophenylthio)-methyl]-dithiophosphate,
S,S-methylene-bis-(O,O-diethyl)-dithiophosphate (ethion),
O,O-dimethyl-S-[1,2-bis-ethoxycarbonyl)-ethyl]-dithiophosphate (malthion),
O,O-dimethyl-S-[(N-methylcarbamoyl)-methyl]-dithiophosphate (dimethoat),
O,O-diethyl-S-[(N-isopropylcarbamoyl)-methyl]-dithiophosphate (prothoat),
O,O-diethyl-S-[N-(1-cyano-1-methylethyl)-carbamoylmethyl]-thiophosphate (cyanthoat),
O,O-diethyl-S-[(N-ethoxycarbonyl-N-methyl)-carbamoylmethyl]-dithiophosphate (mecarbam),
O,O-dimethyl-S-[α-(ethoxycarbonyl)-benzyl]-dithiophosphate (phenthoat),
O,O-dimethyl-S-[2-(N-methylcarbamoyl)-ethylthio]-ethylthiophosphate (vamidothion),
O,O-dimethyl-O-(2,2-dichlorovinyl)-phosphate (dichlorvos),
O,O-dimethyl-O-(1-methoxycarbonyl-1-propen-2-yl)-phosphate (mevinphos),
trans-O,O-dimethyl-O-(2-methoxycarbonyl-2-methylvinyl)-thiophosphate (methacrifos),
O,O-dimethyl-O-[1-chloro-1-(N,N-diethylcarbamoyl)-1-propen-2-yl]-phosphate (phosphamidon),
O,O-dimethyl-O-[1-(n,N-dimethylcarbamoyl)-1-propen-2-yl]-phosphate (dicrotophos),
O,O-diethyl-O-[2-chloro-1-(2,4-dichlorophenyl)-vinyl]-phosphate (chlorfenvinphos),
O,O-dimethyl-O-[2-chloro-1-(2,4,5-trichlorophenyl)-vinyl]phosphate (tetrachlorvinphos),
O,O-diethyl-O-(4-nitrophenyl)-thiophosphate (parathion),
O,O-dimethyl-O-(3-methyl-4-nitrophenyl)-thiophosphate (fenitrothion),
O,O-dimethyl-O-(2,4,5-trichlorophenyl)-thiophosphate (fenchlorphos),
O,O-dimethyl-O-(4-bromo-2,5-dichlorophenyl)-thiophosphate (bromophos),
O,O-dimethyl-O-(3-methyl-4-methylthiohexyl)-thiophosphate (fenthion),
O-methyl-O-(4t-butyl-2-chlorophenyl)-N-methyl-phosphamidate (crufomat),
O-ethyl-S-phenylethane dithiophosphate (fonofos),
4,4'-bis-(dimethoxy-phosphinothioyloxy)-diphenyl sulfide (temephos),
O,O-diethyl-O-(2-isopropyl-2-methyl-4-pyrimidinyl)-thiophosphate (diazinon),
O,O-diethyl-O-(2-diethylamino-6-methyl-4-pyrimidinyl)-thiophosphate (pyrimiphos),
O,O-diethyl-O-(3,5,6-trichloro-2-pyridyl)-thiophosphate (chlorpyrifos),
O,O-diethyl-O-(2-quinoxalyl)-thiophosphate (quinalphos),
O,O-diethyl-O-(S-phenyl-3-isoxazolyl)-thiophosphate (isoxathion),
O,O-diethyl-O-(1-phenyl-1,2,4-triazol-3-yl)-thiophosphate (triazophos),
O,O-diethyl-O-(5-chloro-1-isopropyl-1,2,4-triazol-3-yl)-thiophosphate (isazofos),
O,O-dimethyl-S-(phthalimidomethyl)-dithiophosphate (phosmet),
O,O-dimethyl-S-[(1,2,3-benztriazin-4(3H)on-3-yl)-methyl]-dithiophosphate (azinphosmethyl),
O,O-diethyl-S-[(6-chlorobenzoxazol-2(3H)-on-3-yl)-methyl]-dithiophosphate (phosalon),
O,O-dimethyl-S-[(2-methoxy-1,3,4-thiodiazol-5(4H)-on-4-yl)methyl]-dithiophosphate (methidathion),
O,O-dimethyl-S-[(6-chloro-oxazolone-4,5,6-pyridin-2(3H)-on-3-yl)-methyl]-thiophosphate (azamethiphos),
O,O-dimethyl-S-[(4,6-diamino-1,3,5-triazin-2-yl)-methyl]-dithiophosphate (menazon),
O,O-dimethyl-S-[(5-methoxy-4H-pyron-2-yl)-methyl]-thiophosphate (endothion),
O,O-diethyl-S-[(5,7-dichloro-2-benzoxazolyl)-methyl]-di-thiophosphate (benoxafos),
O,O-dimethyl-2,2,2-trichloro-1-hydroxyethane phosphonate (trichlorphon),
2,3-bis-(diethoxy-phosphinothioylthio)-1,4-dioxane (dioxathion),
2-(diethoxy-phosphinylimino)-1,3-dithiolane (phosfolan),
O,S-dimethyl-thiophosphamidate (methamidophos),
2-methoxy-4H-1,3,2-benzodioxaphosphorine-2-sulfide,
diethoxyphosphinothioyl-oxyimido-phenylacetonitrile (phoxim),
O,O-dimethyl-O-(7-chlorobicyclo-[3,2,0]-hepta-2,6-dien-6-yl)-phosphate (heptenphos),

O-ethyl-S,S-dipropyldithiophosphate (ethoprophos),
O-ethyl-S-propyl-O-(2-chloro-4-bromophenyl)-thiophosphate (profenophos),
O-ethyl-S-propyl-O-(4-methylthiophenyl)-dithiophosphate (merpafos).

It is preferred to use the following phosphoric acid esters:
heptenphos [O,O-dimethyl-O-(7-chlorobicyclo-[3,2,0]-hepta-2,6-dien-6-yl)-phosphate],
dementon-S-methyl [O,O-dimethyl-S-(methylthio)-ethylthiophosphate],
oxydemeton-methyl [O,O-dimethyl-S-(ethylsulfonyl)-ethyl-thiophosphate],
etrimphos [O-(6-ethoxy-2-ethyl-4-pyrimidinyl)-O,O-dimethyl-thiophosphate],
parathion [O,O-diethyl-O-(4-nitrophenyl)-thiophosphate], [O,O-dimethyl-O-4-nitrophenyl)-thiophosphate],
triazophos [O,O-diethyl-O-(1-phenyl-1,2,4-triazol-3-yl)-thiophosphate],
but especially parathion, particularly for controlling biting and sucking insects, including caterpillars of the pyralis moth and cabbage butterfly, arachnids, shield lice, assassin flys, beetles, caterpillars, pseudocaterpillars, larch thrips, etc.

5. Aryl carbamates corresponding to the following general formula

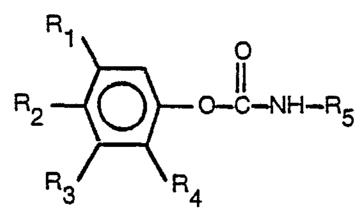
IV

in which
$R_1$ represents $CH_3$ or H,
$R_2$ represents H, dialkylamino, $C_1$—$C_4$-alkyl, $C_1$—$C_4$-alkoxy or $C_1$—$C_4$-alkylthio,
$R_3$ represents H, linear or branched $C_1$—$C_5$-alkyl or dimethylamino-methylimino,
$R_4$ represents H, $C_1$—$C_4$-alkyl, $C_1$—$C_4$-alkoxy, $C_1$—$C_4$-alkythio, dioxolan or alkyl thiomethyl, in addition to which $R_3$ and $R_4$ together may represent the groups —O—$C(CH_3)_2$—O—, —CH=CH—CH=CH— or
$R_5$ represents methyl.

The compounds corresponding to general formula IV are known compounds, such as for example:
4-diallylamino-3,5-dimethylphenyl-methyl-carbamate (allyxycarb),
4-dimethylamino-3-methyl phenyl methyl carbamate (aminocarb),
2,2-dimethyl-1,3-benzodioxol-4-yl methyl carbamate (bendiocarb),
2-sec.-butyl phenyl methyl carbamate (BPMC),
3-(1-methylbutyl)-phenyl methyl carbamate (bufencarb I),
3-(1-ethylpropyl)-phenyl methyl carbamate (bufencarb II),
1-naphthyl methyl carbamate (carbaryl),
2,3-dihydro-2,2-dimethyl benzofuran-7-yl methyl carbamate (carbofuran),
2-(1,3-dioxolan-2-yl)-phenyl methyl carbamate (dioxacarb),
2-ethylthiomethyl phenyl methyl carbamate (ethiofencarb),
3-dimethylaminomethylene-iminophenyl methyl carbamate (formetanat),
3,5-dimethyl-4-methylthiophenyl methyl carbamate (mercapto-dimethur),
4-dimethylamino-3,5-dimethyl phenyl methyl carbamate (mexacarbate),
3,4-dimethyl phenyl methyl carbamate (MPMC),
3-isopropyl-5-methyl phenyl methyl carbamate (promecarb),
2-isopropoxyphenyl methyl carbamate (propoxur),
but especially propoxur (2-isopropoxyphenyl methyl carbamate).

6. Other insecticides which may be used are, for example,
2-methyl-2-(methylthio)-propylidene-amino-methyl cabamate (aldicarb),
1-(methylthio)-ethylidene-amino-methyl carbamate (methomyl),
N,N-dimethyl-α-methyl carbamoyloxy-imino-α-(methylthio)-acetamide (oxamyl),
1,3-di-(carbamoylthio)-2-dimethylaminopropane hydrochloride (cartap),
2-dimethylamino-5,6-dimethyl pyrimidin-4-yl dimethyl carbamate (pirimicarb),
4-(4-chloro-2-methylphenyl)-N'-dimethyl formamidine (chlordimeform),
N,N-di-(2,4-xylyliminomethyl)-methylamine (amitraz),
but especially aldicarb [2-methyl-2-(methylthio)-propylidene-amino]-methyl carbamate.

Of the insecticides mentioned in groups 1 to 6, the following are preferred: permethrin, decamethrin, DDT, methoxychlor, lindane, aldrin, dieldrin, endrin, heptenophos, demeton-S-methyl, oxydemeton-methyl, etrimphos, parthion, triazophos, propoxur, aldicarb.

The individual insecticides are used either on their own or in combination with other insecticides after the addition of phospholipides.

The new insecticidal compositions may be used for controlling the dormant states of insects and mites

(winter spraying), for controlling all stages on growing plants (leaf application), for controlling insect larvae (soil application) and for controlling insect infestation in harvested crops (in-store protection).

The new insecticidal compositions may be prepared as follows:

The phospholipide or a mixture of several phospholipides is dissolved in organic solvents, such as toluene, ethyl acetate, xylene, petrol, ethanol or methanol, or in mixtures of these solvents. The choice of the solvent or solvent mixture will depend upon the solubility of the insecticide used. The insecticide is dissolved in the phospholipide solution, optionally by heating. On completion of dissolution, the solvent is distilled off *in vacuo* while heating. The product thus obtained is converted into a suitable standard commercial form by the addition of suitable auxiliaries such as, for example, fillers, vehicles, diluents, wetting agents, stabilizers, gelating agents, evaporation accelerators, extenders or auxiliaries which promote the spraying or atomisation of the insecticidal compositions according to the invention.

The new insecticidal compositions may also be prepared by mixing the insecticide with the phospholipide or phospholipides and the auxiliaries and fillers required, dissolving or suspending the resulting mixture in an organic solvent and then removing the solvent. The mixture obtained in this way is ready for use.

In the case of the insecticides which are soluble in water or in water/alcohol mixtures, the insecticide is with advantage first dissolved in water or in the water/alcohol mixture, the phospholipide or phospholipide mixture is added to the resulting solution and the product is converted into a solution or emulsion either by stirring or by the application of ultrasonic waves. The emulsifiers normally required may be added before or after this stirring operation. The emulsion or solution thus obtained is freed from the solvent mixture or water in the usual way, for example by distillation, spray-drying or freeze-drying. The resulting product may be used either as such or optionally after the addition of suitable auxiliaries. The product may even be re-emulsified or redissolved in water and used as a spray. Phospholipide solutions or emulsions in organic or aqueous-organic solvents or water may also be added to the commercially available preparations before liquid-phase application.

Examples of suitable vehicles are talcum, kaolin, bentonite, kieselguhr, lime or crushed rock. Other suitable auxiliaries are, for example, surface-active compounds, such as soaps (fatty acid, salts), fatty alcohol sulfonates or alkyl sulfonates. Gelatin, casein, albumin, starch or methyl cellulose may be used as stabilisers or protective colloids.

The new insecticidal compositions may be used in liquid or solid form, for example as dusting powders, scattering preparations, granulates, sprays, aerosols, emulsions or solutions (*cf.* for example Winnacker-Kuchler, Chem. Technologie 1972, Vol. 4, pages 700 to 703).

Applications for the new insecticidal compositions include, for example, the control of grasshoppers, soil insects, arachnids, shield lice, harvest flies, thrips, such as for example wireworms, white grubs, dance flies, weevil larvae, cutworms, cabbage fly larvae, bulb fly larvae, particularly in cereal crops; the fruit fly, particularly in corn, oats, barley; jarr worms, ants, spring tails, millipedes, termites, woodlice, leaf lice, boll chafers, particularly in cotton, stem borers, particularly in rice and corn; flies and gnats, particularly in cereal crops; potato beetles, turnip flies, rape pollen beetles, weevils, caterpillars and flies, particularly in vegetable growing; fruit maggots, caterpillars, psylla, particularly in fruit growing; grape moths, vine lice, beetles and caterpillars, particularly in viniculture; caterpillars and bugs, particularly in tea plantations; caterpillars, bugs, grease lice in cocoa plantations; all types of beetles in banana plantations; fruit flies, particularly in citrus fruit groves; olive flies, olive moths, particularly in olive growing, caterpillars, beetles and sawflies in forestry.

The new insecticide/phospholipide mixtures are also suitable for controlling ecto- and endo-parasites in domestic and useful animals.

Example 1

Production of 1 kg of a scattering preparation containing aldicarb as its active ingredient:

50 g of aldicarb, 120 g of Phospholipon 25, 0.1 g of ascorbic palmitate and 0.5 g of lignin sulfonate are dissolved in 50 ml of toluene and 30 to 35°C. The resulting solution is kneaded with 804 g of $CaCO_3$ (quality: precipitated calcium carbonate) and the resulting paste is dried and ground. The powder obtained is

1. dissolved with 15.0 g of lignin sulfonate in water and the resulting solution is
2. mixed with 100 ml of a 10% gelatin solution.

The pellets formed are dried in a fluidised-bed dryer to form a powder which may be used for example for controlling arachnids in ornamental plants.

The product thus obtained is equivalent in its effectiveness against nematodes to the commercial product containing 10% of aldicarb.

Example 2

Production of 1 litre of an emulsion concentrate containing decamethrin as its active ingredient:

12.5 g of decamethrin, 150 g of phospholipon 80 in 50 ml of ethanol (concentrate), 50 ml of xylene, 2 g of tagat O (polyethylene glycol glyerol mono-oleate), 5 g of Tegomuls O (glycerol monodioleate) and 3 g of Cellosolve are made up to 1 litre with Shellsol N.

The mixture obtained is suitable for example for treating 1 hectare of a cornfield against corn borers.

Example 3

Production of 1 kg of a spraying powder containing DDT as its active ingredient:

125 g of DDT, 250 g of phospholipon 80 in 50 ml of ethanol, 520 ml of xylene and 0.6 g of DONSS (dioctyl sodium sulfosuccinate) as wetting agent are mixed together and the resulting mixture kneaded with 180 g of bentonite to form a homogeneous paste which is then dried, passed through a sieve, made up to 1 kg with bentonite and homogeneously mixed.

1 kg of the mixture thus obtained contains 250 g of DDT which is equivalent in its effectiveness to 1 kg of a standard commercial preparation containing 500 g of DDT.

Example 4

Production of 1 litre of an emulsion concentrate containing methoxychlor as its active ingredient:

100 g of methoxychlor, 220 g of phospholipide concentrate (200 g of Phospholipon 55 in 50 ml of ethanol), 50 ml of xylene, 10 g of Marlowet IHF and 10 g of Cellosolve are made up to 1 litre with Shellsol A. The mixture thus obtained is suitable for example for treating 1 hectare of a rape field against rape pollen beetle.

This mixture which contains 100 g/l of methoxychlor is equivalent in its effectiveness to standard formulations containing 200 g/l of methoxychlor.

Example 5

Production of 1 litre of an emulsion spray containing lindane as its active ingredient:

125 g of lindane dissolved in 200 ml of ethyl acetate and 100 ml of xylene are mixed with a phospholipide concentrate of 250 g of Phospholipon 100 in 50 ml of ethanol in the presence of 10 g of a mixed emulsifier (Marlowet IHF) and 5 g of Cellosolve and the resulting mixture is made up to 1 litre with petrol fractions, such as Shellsol N.

The mixture obtained is suitable for example for controlling chewing and sucking insects in leaf vegetable fields or potato beetles in potato fields.

Treatment with standard commercial preparations requires twice the quantity of lindane to obtain the same effect.

Example 6

Production of 1 litre of an emulsion concentrate containing dieldrin as its active ingredient:

100 g of dieldrin, 200 g of Phospholipon 80 in 50 ml of ethanol (concentrate), 200 ml of xylene, 15 g of Marlowet mixed emulsifier and 5 g of Cellosolve are made up to 1 litre with Shellsol N.

This concentrate is equivalent in its effect to commercial preparations containing 250 g of dieldrin per litre.

Example 7

Production of 1 litre of an emulsion concentrate containing endrin as its active ingredient:

90 g of endrin, 180 g of Phospholipon 55 in 50 ml of ethanol (concentrate) 450 ml of xylene, 10 g of Marlowet mixed emulsifier and 8 g of Cellosolve are made up to 1 litre with Shellsol A. The mixture thus obtained is suitable for example for treating a cottonfield against insects.

Treatment with standard commercial preparations requires more than twice the quantity of endrin for the same area.

Example 8

Production of 1 litre of an emulsion concentrate containing heptenophos as its active ingredient:

120 g of heptenophos, 200 g of Phospholipon 100 in 40 ml of ethanol (concentrate), 120 ml of xylene, 10 g of Tween 80, 2 g of Span 80 and 10 g of Cellosolve are made up to 1 litre with Shellsol A.

650 ml of the mixture are suitable for example for treating 1 hectare of a leaf-vegetable field against aphids i.e. 80 g instead of the usual quantity of 170 g. The mixture is also suitable for controlling ectoparasites in domestic animals.

Example 9

Production of 1 litre of an emulsion spray containing demeton-S-methyl as its active ingredient:

125 g of demeton-S-methyl, 200 g of Phospholipon 55 in 150 ml of ethanol (concentrate), 8 g of Cellosolve, 10 g of Tween 80 and 3 g of Span 80 are made up to 1 litre with Shellsol N.

0.55 litre of the mixture is suitable for example for treating 1 hectare of a beet field against aphids (70 g of demeton-D-methyl).

Treatment with standard commercial preparations requires 250 g of demeton-S-methyl.

Example 10

Production of 1 litre of an emulsion concentrate containing etrimphos as its active ingredient:

250 g of etrimphos, approximately 300 g of phospholipide concentrate (250 g of Phospholipon 80 in 50 ml of ethanol), 7 g of Cellosolve, 9 g of Tween 80 and 2 g of Span 80 are made up to 1 litre with Shellsol N.

1 litre of the resulting mixture is suitable for example for treating 1 hectare of a cabbage field against chewing and sucking insects.

Treatment with standard commercial preparations requires twice the quantity of etrimphos.

Example 11

Production of 1 litre of an emulsion spray containing parathion as its active ingredient:

230 g of parathion, approximately 300 g of phospholipide concentrate (230 g of Phospholipon 80 in 100 ml of ethanol), 50 ml of xylene and 10 g of Marlowet IHF are made up to 1 litre with Shellsol A.

650 ml (150 g of parathion) of this mixture is suitable for example for treating 1 hectare of a rape field against rape pollen beetles.

Treatment with standard commercial preparations requires twice the amount of parathion.

Example 12

Production of 1 litre of an emulsion concentrate containing triazophos as its active ingredient:

100 g of triazophos, 150 g of Phospholipon 55 in 100 ml of ethanol (added in the form of a concentrate), 1 g of Cellosolve, 8 g of Tween 80 and 2 g of Span 80 are made up to 1 litre with Shellsol N.

1 litre of the resulting mixture (100 g of triazophos) is suitable for example for treating 1 hectare of a field of dwarf beans.

Treatment with standard commercial preparations requires twice the quantity of triazophos per hectare.

Example 13

Production of 1 litre of an emulsion concentrate containing propoxur as its actrive ingredient:

150 g of propoxur, 200 g of Phospholipon 80 in 150 ml of ethanol (in the form of a concentrate), 100 ml of isopropanol, 5 g of Tagat O, 5 g of Tegomuls O and 10 g of Cellosolve are made up to 1 litre with Shellsol N.

2 litres of the resulting mixture (300 g of propoxur) are suitable for example for treating 1 hectare of a field of stone fruit.

Treatment with standard commercial preparations requires twice the quantity of propoxur.

Example 14

Production of 1 kg of an emulsion concentrate (16%) containing dimethoat as its active ingredient:

160 g of dimethoat, 160 g of Phospholipon 38, 240 g of toluene, 160 g of isophorone, 160 g of N-(2-hydroyethyl)-caproic acid amide, 110 g of Cremophor EW and 10 g of PEG 6000 are mixed in the same way as in Examples 1 to 13.

After dilution with water, the emulsion concentrate obtained is particularly suitable for application by the ULV or LV technique.

Example 15

Production of 1 kg of an emulsion concentrate containing decamethrin (16%) as its active ingredient:

160 g of decamethrin, 160 g of Phospholipon 38, 120 g of toluene, 120 g of xylene, 160 g of isophorone, 160 g of N-(2-hydroxyethyl)-caproic acid amide, 70 g of Cremophor EL and 50 g of PEG 6000 are processed in the same way as in Examples 1 to 14. After dilution with water, the emulsion concentrate obtained is particularly suitable for application by the ULV or LV technique, for example for treatment against chewing insects in hop fields.

Example 16

Production of 1 kg of an emulsion concentrate containing heptenophos (17%) as its active ingredient:

170 g of heptanophos, 160 g of Phospholipon 55, 250 g of xylene, 160 g of cyclohexanone, 160 g of N-(2-hydroxyethyl)-heptanoic acid amide, 80 g of Cremophor EL and 20 g of PEG 6000 are mixed together. The emulsion concentrate obtained may be mixed on application with the requisite quantity of water. The mixture obtained is suitable for example for controlling ectoparasites in domestic animals.

Example 17

Production of 1 kg of an emulsion concentrate (16%) containing parathion as its active ingredient:

160 g of parathion, 160 g of Phospholipon 38, 270 g of toluene, 160 g of isophorone, 160 g of N-(2-hydroxyethyl)-caproic acid amide, 80 g of Cremophor EL and 10 g of PEG 6000 are dissolved while stirring. The concentrate is emulsified in water according to the particular application intended.

Example 18

1 kg of an emulsion concentrate (16%) containing propoxur as its active ingrdient is prepared in the same way as in Example 17. The ingredients, namely 160 g of propoxur, 170 g of Phospholipon 55, 120 g of toluene, 120 g of xylene, 180 g of isophorone, 160 g of N-(2-hydroxyethyl)-heptanoic acid amide and 70 g of Cremophor EL, are processed in the same way as in Examples 1 to 14.

Example 19

Production of 300 g of a spraying powder containing pirimicarb (40%) as its active ingredient:

120 g of pirimicarb, 120 g of Phospholipon 38, 1.5 g of Marlowet IHF, 52.5 g of dry glucose and 6 g of Bentone EW are stirred into 1080 g of water, homogenised and spray-dried.

Example 20

Production of 400 g of a spraying powder containing diflubenzuron (10%) as its active ingredient:

40 g of diflubenzuron, 200 g of Phospholipon 38, 140 g of dry glucose, 18 g of Bentone EW and 2 g of Marlowet IHF are mixed in 1000 g of water, homogenised and spray-dried.

Example 21

Production of 1 kg of an emulsion concentrate (1%) containing as its active ingredient a standard commercial pyrethrum extract of Chrysanthenum cinerariifolii (the standardised extract contains 25% of active substances).

40 g of pyrethrum extract (10 g of pyrethroids), 120 g of piperonyl butoxide, 160 g of Phospholipon 38, 240 g of xylene, 160 g of isophorone, 160 g of N-(2-hydroxyethyl)-caproic acid amide, 80 g of Cremophor EL, 20 g of PEG 6000 and 20 g of monodiglyceride are processed in the same way as in Example 19.

Example 22

Production of 2 kg of a finished product containing a standard commercial pyrethrum extract as its active ingredient (the standardised extract contains 25% of active substance).

8 g of pyrethrum extract (2 g of pyrethroids), 24 g of piperonyl butoxide, 160 g of Phospholipon 55, 240 g of xylene, 160 g of isophorone, 160 g of N-(2-hydroxyethyl)-caproic acid amide, 80 g of Cremophor EL, 30 g of PEG 6000 and 30 g of soya oil are mixed, dissolved and made up to 2 kg with deionised water. The clear solution obtained contains 1 g of pyrethroids per kg and may be used in undiluted form.

In the following Application Examples, the commercial products containing the active ingredient referred to by its generic name were used as the active ingredients.

Example 23

Comparison tests with parathion

For controlling aphids, fields of promaceous fruit were sprayed with various mixtures and the percentage destruction of the aphids measured.

| Test No. | Mixture | Aphids destroyed in% |
|---|---|---|
| 1 | parathion 0.35 g/l | 90 |
| 2 | phosphatidyl choline 90 mg/l | 0 |
| 3 | parathion 0.175 g/l<br>+ phosphatidyl choline 90 mg/l | 100 |
| 4 | parathion 0.087 g/l<br>+ phosphatidyl choline 90 m/l | 65 |
| 5 | parathion 0.175 g/l | 30 |
| 6 | parathion 0.087 g/l | 5 |
| 7 | parathion 0.087 g/l<br>+ phosphatidyl choline 45 mg/l | 65 |

Example 24

Comparison test with permethrin

For controlling aphids, fields of promaceous fruit were sprayed with various mixtures and the percentage destruction of aphids was measured.

| Test No. | Mixture | Aphids destroyed in% |
|---|---|---|
| 1 | permethrin 1.0 g/l | 100 |
| 2 | permethrin 0.5 g/l | 40 |
| 3 | permethrin 0.5 g/l + phosphatidyl choline 90 mg/l | 100 |
| 4 | permethrin 0.05 g/l + phosphatidyl choline 45 mg/l | 100 |
| 5 | phosphatiyl choline 90 mg/l | 0 |

Example 25

Comparison test with decamethrin

For controlling aphids, fields of promaceous fruit were sprayed with various mixtures and the percentage destruction of aphids was measured.

| Test No. | Mixture | Aphids destroyed in% |
|---|---|---|
| 1 | decamethrin 0.3 g/l | 100 |
| 2 | decamethrin 0.15 g/l | 30 |
| 3 | decamethrin 0.15 g/l + phosphatidyl choline 90 mg/l | 100 |
| 4 | decamethrin 0.15 g/l + phosphatidyl choline 45 mg/l | 100 |
| 5 | phosphatidyl choline 90 mg/l | 0 |

Example 26

Comparison test with methomyl

For controlling cabbage worms (Pieris brassicae), cabbage fields are treated with various mixtures and the percentage destruction measured.

| Test No. | Mixture | Cabbage worms destroyed in% |
|---|---|---|
| 1 | methomyl 1.2 kg/ha | 95 |
| 2 | methomyl 0.6 kg/ha | 40 |
| 3 | methomyl 0.6 kg/ha + phospholipide 90 mg/l | 100 |
| 4 | methomyl 0.6 kg/ha + phospholipide 45 mg/l | 90 |
| 5 | phosphilipide 90 mg/l | 0 |

DESIGNATION OF TRADE MARK PRODUCTS:

| | |
|---|---|
| page 9, line 49 | Phospholipon 25 |
| 61 | Phospholipon 80 |
| 62 | tagat O |
| 62 | Tegomuls, Cellosolve |
| 63 | Shellsol N |
| page 10, line 3 | Phospholipon 80 |
| 12 | Phospholipon 55 |
| 13 | Marlowet IHF, Cellosolve |
| 13 | Shellsol A |
| 22 | Phospholipon 100 |
| 23 | Marlowet IHF, Cellosolve |
| 24 | Shellsol N |
| 31 | Phospholipon 80 |
| 32 | Marlowet |
| 32 | Cellosolve |
| 32 | Shellsol N |
| 37 | Phospholipon 55 |
| 38 | Marlowet |
| 38 | Cellosolve |
| 38 | Shellsol A |
| 45 | Phospholipon 100 |
| 46 | Tween 80, Span 80, Cellosolve |
| 46 | Shellsol A |
| 53 | Phospholipon 55 |
| 54 | Cellosolve |
| 54 | Tween 80, Span 80 |
| 54 | Shellsol N |
| 61 | Phospholipon 80 |
| 62 | Tween 80, Span 80 |
| 62 | Shellsol N |
| page 11, line 3 | Phospholipon 80 |
| 4 | Marlowet IHF |
| 4 | Shellsol A |

| | |
|---|---|
| page 11, line 11 | Phospholipon 55 |
| 12 | Cellosolve, Tween 80, Span 80 |
| 12 | Shellsolve N |
| 20 | Phospholipon 80 |
| 21 | Tagat O, Tegomuls O |
| 21 | Cellosolve, |
| 22 | Shellsol N |
| 29 | Phospholipon 38 |
| 30 | Cremophor EW |
| 64 | Phospholipon 38 |
| 64 | Marlowet IHF, Bentone EW |
| page 12, line 3 | Phospholipon 38 |
| 3 | Bentone EW |
| 4 | Marlowet IIHF |
| 10 | Phospholipon 38 |
| 11 | Cremophor EL |
| 17 | Phospholipon 55 |
| 18 | Cremophor EL |

**Claims**

1. Phosphatide containing insecticidal composition, characterized in that it consists of

a) one or more insecticidally active substances and

b) one or more de-oiled natural phosphilipid products soluble in ethanol consisting of 25 to 96% of phosphatidyl choline or 96% of hydrogenated phosphatidyl choline and 25 to 0% of phosphatidyl ethanolamine, 20 to 0% of phosphatidyl inositol and the difference to 100% of one or several of N-acyl phosphatidyl ethanolamines, phosphatidyl serine, phosphatidyl glycerol and lysolecithin in a ratio by weight of a:b from 1:0.5 to 1:10 in addition to standard vehicles, diluents, solvents, propellants and/or other inert auxiliaries.

2. An insecticidal composition as claimed in Claim 1, characterized in that constituents a) and b) are present in a ratio by weight of from 1:1 to 1:5.

3. An insecticidal composition as claimed in Claim 1 or 2, characterized in that phosphatidyl choline is used as the phosphatidyl choline product.

4. An insecticidal composition as claimed in one or more of Claims 1 to 3, characterized in that the insecticide used is a pyrethroid corresponding to the following general formula

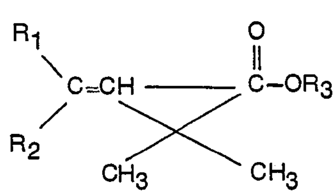

I

in which

$R_1$ represents $CH_3$, COOH, $COOCH_3$, Cl, Br,

$R_2$ represents $CH_3$, Cl, Br

$R_3$ represents substituted cyclopentenone, substituterd furyl methyl, phthalimidomethyl, phenoxybenzyl, α-cyano-phenoxybenzyl of a 4-phenyl-3-chloro-but-2-enyl group.

5. An insecticidal composition as claimed in Claim 4, characterized in that the pyrethroid used is pyrethrin, cinerin, josmolin, furethrin, allethrin, cyclethrin, bathrin, dimethrin, phthalthrin, japothrin, pyrestrin, butethrin, penothrin, permethrin or decamethrin.

6. An insecticidal composition as claimed in Claim 4 or 5, characterized in that permethrin is used as the pyrethroid.

7. An insecticidal composition as claimed in Claim 4 or 5, characterized in that decamethrin is used as the pyrethroid.

8. An insecticidal composition as claimed in one or more of Claims 1 to 3, characterized in that the insecticide used is a chlorinated hydrocarbon corresponding to the following general formula

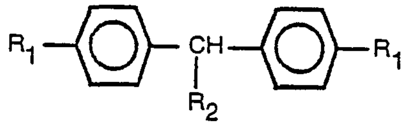

II

in which

$R_1$ represents halogen, methoxy or $C_1$—$C_3$-alkyl and

$R_2$ represents di- or trichloromethyl or the group

$$—CH—(CH_2)_{1-2}—CH_3.$$
$$NO_2$$

9. An insecticidal composition as claimed in Claim 8, characterized in that 2.2-bis-(p-chlorophenyl)-1.1.1-trichloroethane is used as the insecticide.

10. An insecticidal composition as claimed in Claim 8, characterized in that 2.2-bis-(p-methoxyphenyl)-1.1.1-trichloroethane is used as the insecticide.

11. An insecticidal composition as claimed in Claim 8, characterized in that DFDT, TDE, perthane, bulan or prolan is used as the insecticide.

12. An insecticidal composition as claimed in one or more of Claims 1 to 3, characterized in that chlordan, heptachlor, dihydroheptachlor, isobenzan, endosulfan or bromadan is used as the insecticide.

13. An insecticidal composition as claimed in one or more of Claims 1 to 3, characterized in that lindan, aldrin, dieldrin or endrin is used as the insecticide.

14. An insecticidal composition as claimed in one or more of Claims 1 to 3, characterized in that the insecticide used is a phosphoric acid ester corresponding to the following general formula

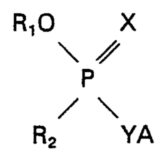

III

in which

X and Y, which may be the same or different, are oxygen or sulphur,

$R_1$ represents methyl or ethyl,

$R_2$ represents methoxy or ethoxy,

A represents one of the following formulas

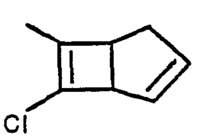

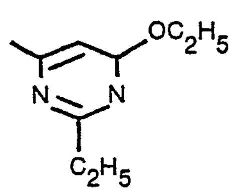

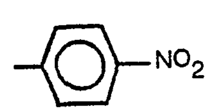

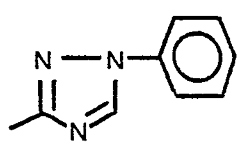

$-CH_2CONHCH_3$

15. An insecticidal composition as claimed in Claim 14, characterized in that the insecticide used is demeton-O, demeton-S, disulfoton, phorat, terbufos, ethin, malthion, dimethoat, prothoat, cyanathoat, mercarbam, phenthoat, vamidothion, dichlorvos, mevinphos, methacrifos, phosphamidon, dicrotophos, chlorfenvinphos, tetrachlorvinphos, parathion, fenitrothion, fenchlorphos, bromophos, fenthion, crufomat, fonofos, temephos, diazinon, pirimiphos, chlorpyrifos, quinalphos, isoxathion, triazophos, isazofos, phosmet, azinphosmethyl, phosalon, methidathion, azemethiphos, menazon, endothion, benoxafos,

trichlorphon, dioxathion, phosfolan, methamidophos, phoxim, heptenphos, ethoprophos, profenofos or merpafos.

16. An insecticidal composition as claimed in Claim 14, characterized in that the insecticide used is heptenophos, demeton-S-methyl, oxydemeton-methyl, etriumphos, parthion or triazophos.

17. An insecticidal composition as claimed in Claim 16, characterized in that parathion is used as the insecticide.

18. An insecticidal composition as claimed in one or more of Claims 1 to 3, characterized in that the insecticide used is an aryl carbamate corresponding to the following general formula

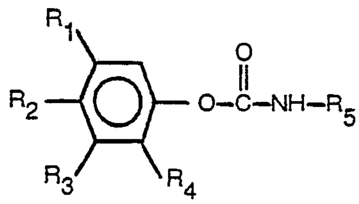

in which

$R_1$ represents $CH_3$ or H,

$R_2$ represents H, dialkylamino, dimethyl, methyl or methylthio,

$R_3$ represents H, linear or branched $C_{1-5}$-alkyl or dimethylamino methylimino,

$R_4$ represents H, $C_{1-4}$-alkyl, $C_{1-4}$-alkoxy, $C_{1-4}$-alkylthio, dioxolan or alkylthiomethyl,

in addition to which $R_3$ and $R_4$ together may also form the groups $—O—C(CH_3)_2—O$ or $—CH=CH—CH=CH—$,

$R_5$ represents methyl.

19. An insecticidal composition as claimed in Claim 18, characterized in that the insecticide used is allyxycarb, aminocarb, bendiocarb, BPMC, bufencarb, carbaryl, carbofuran, dioxacarb, ethiofencarb, formetanat, mercaptodimethur, mexacarbate, MPMC or promecarb.

20. An insecticidal composition as claimed in Claim 18, characterized in that propoxur is used as the insecticide.

21. An insecticidal composition as claimed in one or more of Claims 1 to 3, characterized in that the insecticide used is aldicarb, methomyl, oxamyl, cartap, pirimicarb, chlordimeform or amitraz.

22. An insecticidal composition as claimed in one or more of Claims 1 to 3, characterized in that aldicarb is used as the insecticide.

23. A process for producing the insecticidal compositions claimed in one or more of Claims 1 to 22, characterized in that the phospholipide is dissolved in an organic solvent or solvent mixture, the insecticide is dissolved in the resulting solution, optionally by heating and/or stirring, after which the solvent or solvent mixture is removed *in vacuo* and the mixture obtained is converted into a standard formulation after the addition of standard fillers and auxiliaries.

24. A process for producing the insecticidal compositions claimed in one or more of Claims 1 to 22, characterized in that the insecticide(s) is dissolved or suspended in an organic solvent together with one or more phospholipides and optionally together with standard fillers and auxiliaries, after which the solvent is removed.

25. A process for producing the insecticidal compositions claimed in one or more of Claims 1 to 22, characterized in that one or more water-soluble or alcohol-soluble insecticides is/are dissolved in water or water/alcohol mixtures together with one or more phospholipides by stirring and/or gentle heating and/or by the application of ultrasonic waves, after which the solvent or solvent mixture is removed.

26. The use of the insecticidal compositions claimed in one or more of Claims 1 to 22 for controlling insects.

**Revendications**

1. Composition insecticide contenant des phosphatides, caractérisée en ce qu'elle est constituée par

a) une ou plusieurs substances à activité insecticide et

b) un ou plusieurs produits à base de phospholipides naturels déshuilés solubles dans l'éthanol constitués par 25 à 96% de phosphatidylcholine ou 96% de phosphatidylcholine hydrogénée et 25 à 0% de phosphatidyléthanolamine, 20 à 0 de phosphatidylinositol, et la différence à 100% d'un ou plusieurs composés parmi les N-acyl-phosphatidyléthanolamines, la phosphatidylsérine, le phosphatidylglycérol et la lysolécithine, dans un rapport pondéral a:B de 1:0,5 à 1:10, en plus de véhicules, diluants, solvents, gas propulseurs et/ou autres auxiliaires inertes courants.

2. Composition insecticide selon la revendication 1, caractérisée en ce que les constituants a) et b) sont présents dans un rapport pondéral de 1:1 à 1:5.

3. Composition insecticide selon la revendication 1 ou 2, caractérisé en ce que l'on emploie le phosphatidylcholine comme produit à base de phosphatidylcholine.

4. Composition insecticide selon l'une ou plusieurs des revendications 1 à 3, caractérisé en ce que l'insecticide utilisése est un pyréthroïde répondant à la formule générale suivante

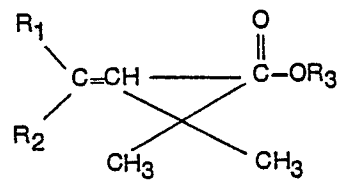

I

dans laquelle $R_1$ représente $CH_3$, COOH, $COOCH_3$, Cl, Br, $R_2$ représente $CH_3$, Cl, Br, $R_3$ représente un groupe cyclopentanone, furylméthyle substitué, phtalimidométhyle, phénobenzyle, α-cyanophénoxybenzyle ou 4-phényl-3-chloro-but-2-ényle.

5. Composition insecticide selon la revendication 4, caractérisé en ce que le pyréthroïde utilisé est la pyréthrine, la cinérine, la josmoline, la furéthrine, l'alléthrine, la cycléthrine, la bathrine, la diméthrine, la phtalthrine, la japothrine, la pyresthrine, la butéthrine, la pénothrine, la perméthrine ou la décaméthrine.

6. Composition insecticide selon la revendication 4 ou 5, caractérisé en ce que l'on utilise comme pyréthroïde la perméthrine.

7. Composition insecticide selon la revendication 4 ou 5, caractérisé en ce que l'on utilise comme pyréthroïde la décaméthrine.

8. Composition insecticide selon l'une ou plusieurs des revendications 1 à 3, caractérisé en ce que l'insecticide utilisé est un hydrocarbure chloré répondant à la formule générale

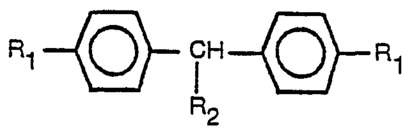

II

dans laquelle $R_1$ représente un halogène, un group méthoxy ou alkyle en $C_1$—$C_3$ et $R_2$ représente le groupe di ou trichlorométhyle ou le groupe

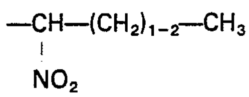

9. Composition insecticide selon la revendication 8, caractérisé en ce que l'on utilise comme insecticide le 2,2-bis-(p-chlorophényl)-1,1,1-trichloroéthane.

10. Composition insecticide selon la revendication 8, caractérisé en ce que l'on utilise comme insecticide le 2,2-bis-(p-méthoxyphényl)-1,1,1-trichloroéthane.

11. Composition insecticide selon la revendication 8, caractérisé en ce que l'on utilise comme insecticide le DFDT, le TDE, le perthane, le bulane ou le prolane.

12. Composition insecticide selon une ou plusieurs des revendications 1 à 3, caractérisé en ce que l'on utilise comme insecticide le chlordane, l'heptachlore, le dihydroheptachlore, l'isobenzane, l'endosulfane ou le bromadane.

13. Composition insecticide selon l'une ou plusieurs des revendications 1 à 3, caractérisée en ce que l'on utilise comme insecticide le lindane, l'aldrine, la dieldrine ou l'endrine.

14. Composition insecticide selon l'une ou plusieurs des revendications 1 à 3, caractérisée en ce que l'insecticide utilisé est un ester de l'acide phosphorique répondant à la formule générale

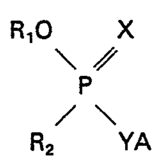

III

dans laquelle X et Y, qui peuvent être identiques ou différents, sont l'oxygène ou le soufre, $R_1$ représente le méthyle ou l'éthyle, $R_2$ représente le méthoxy ou l'éthoxy, A représente l'une des formules suivantes

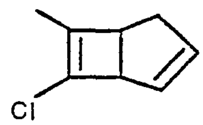

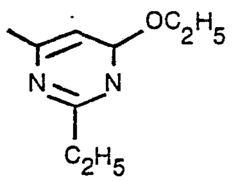

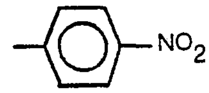

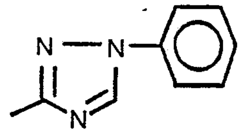

$-CH_2CONHCH_3$

15. Composition insecticide selon la revendication 14, caractérisé en ce que l'insecticide utilisé est le deméthon-O, le deméthon-S, le disulfoton, le phorate, le terbufos, l'éthion, le malthion, le diméthoate, le prothoate, le cyanothoate, le mécarbam, le phenthoate, le vamidothion, le dichlorvos, le mévinphos, le méthacrifos, le phosphamidon, le dicrotophos, le chlorfenvinphos, le tétrachlorvinphos, le parathion, le fénitrothion, le fenchlorphos, le bromophos, le fenthion, le crufomate, le fonofos, le téméphos, le diazinon, le primimiphos, le chlorpyrifos, le quinalphos, l'isoxathion, le triazophos, l'isozofos, le phosmet, l'azinphosméthyl, le phosalon, le méthidathion, l'azaméthiphos, le mézanon, l'endothion, le bénoxafos, le trichlorphon, le dioxathion, le phosofolan, le méthamidophos, le phoxime, l'heptenphos, l'éthoprophos, le profénofos ou le merpafos.

16. Composition insecticide selon la revendication 14, caractérisé en ce que l'insecticide utilisé est l'hepténophos, le deméton-S-méthyl, l'oxydeméthon-méthyl, l'étriumphos, le parathion ou le triazophos.

17. Composition insecticide selon la revendication 16, caractérisé en ce que l'on utilise comme insecticide le parathion.

18. Composition insecticide selon l'une ou plusieurs des revendications 1 à 3, caractérisée en ce que l'insecticide utilisé est un aryl-carbamate répondant à la formule générale suivante

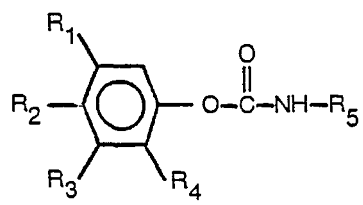

dans laquelle $R_1$ représente $CH_3$ ou H, $R_2$ représente H, le groupe dialkylamino, diméthyle, méthyle ou méthylthio, $R_3$ représente H, un groupe alkyle en $C_1$—$C_5$ linéaire ou ramifié ou diméthylaminométhylimino, $R_4$ représente H, un groupe alkyle en $C_1$—$C_4$, alcoxy en $C_1$—$C_4$, alkylthio en $C_1$—$C_4$, dioxolanne ou alkylthiométhyle, outre que $R_3$ et $R_4$ peuvent aussi former ensemble les groupes $—O—C(CH_3)_2—O$ ou $—CH{=}CH—CH{=}CH—$, $R_5$ représente le groupe méthyle.

19. Composition insecticide selon la revendication 18, caractérisé en ce que l'insecticide utilisé est l'allyxycarb, l'aminocarb, le bendiocarb, le PBMC, le bufencarb, le carbaryl, le carbofuranne, le dioxacarb, l'éthiofencarb, le formétanate, le mercaptodiméthur, le mexacarbate, le MPMC ou le promécarb.

20. Composition insecticide selon la revendication 18, caractérisée en ce que l'on utilise comme insecticide le propoxur.

21. Composition insecticide selon l'une ou plusieurs des revendications 1 à 3, caractérisée en ce que l'insecticide utilisé est l'aldicarb, le méthomyl, l'oxamyl, le cartap, le pirimicarb, le chlordiméform ou l'amitraz.

22. Composition insecticide selon l'une ou plusieurs des revendications 1 à 3, caractérisée en ce que l'on utilise comme insecticide l'aldicarb.

23. Procédé de production des compositions insecticides selon l'une ou plusieurs des revendications 1 à 22, caractérisé en ce que l'on dissout le phospholipide dans un solvant organique ou dans un mélange de solvants organiques, que l'on dissout l'insecticide dans la solution résultante, éventuellement en chauffant et/ou sous agitation, après quoi on élimine le solvant ou le mélange de solvants sous vide et on transforme le mélange obtenu en formulation courante après l'addition de charges et auxiliaires courants.

24. Procédé de production des compositions insecticides selon l'une ou plusieurs des revendications 1 à 22, caractérisé en ce que l'on dissout ou l'on met en suspension l'insecticide (les insecticides) dans un solvant organique avec un ou plusieurs phospholipides et éventuellement avec des charges et des auxiliaires courants, après quoi on élimine le solvant.

25. Procédé de production des compositions insecticides selon l'une ou plusieurs des revendications 1 à 22, caractérisé en ce que l'on dissout un ou plusieurs insecticides hydrosolubles ou solubles dans les alcools dans de l'eau ou dans des mélanges eau/alcool avec un ou plusieurs phospholipides sous agitation et/ou chauffage ménagé et/ou en appliquant des ondes ultrasonores, après quoi on élimine le solvant ou mélange de solvants.

26. Utilisation des compositions insecticides selon l'une ou plusieurs des revendications 1 à 22 pour combattre les insectes.

**Patentansprüche**

1. Phosphatidhaltige Insektizid-Zusammensetzung, dadurch gekennzeichnet, daß sie aus

a) einem oder mehreren Insektizid-Wirkstoffen und

b) einem oder mehreren entölten natürlichen, ethanollöslichen Phospholipid-Produkten bestehend aus 25 bis 96% Phosphatidylcholin oder 96% hydriertes Phosphatidylcholin und 25 bis 0% Phosphatidylethanolamin, 20 bis 0% Phosphatidylinosit und der Differenz bis 100% aus einer oder mehreren Verbindungen aus der Gruppe der N-Acyl-phosphatidylethanolamine, Phosphatidylserin, Phosphatidylglycerol und Lysolecithin im Gewichtsverhältnis a:b von 1:0,5 bis 1:10 neben üblichen Träger-, Verdünnungs-, Lösungs-, Versprühungs- und/oder anderen inerten Hilfsmitteln besteht.

2. Insektizid-Zusammensetzung gemäß Anspruch 1, dadurch gekennzeichnet, daß die Bestandteile a) und b) im Gewichtsverhältnis 1:1 bis 1:5 vorliegen.

3. Insektizid-Zusammensetzung gemäß einem oder mehreren der Ansprüche 1 oder 2, dadurch gekennzeichnet, daß als Phospholipid Phosphatidylcholin eingesetzt wird.

4. Insektizid-Zusammensetzung gemäß einem oder mehreren der Ansprüche 1 bis 3, dadurch gekennzeichnet, daß als Insektizid-Wirkstoff ein Pyrethroid der allgemeinen Formel

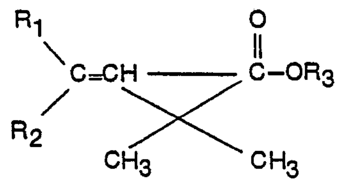

I

verwendet wird, worin

$R_1$ $CH_3$, COOH, $COOCH_3$, Cl, Br,

$R_2$ $CH_3$, Cl, Br

$R_3$ eine substituierte Cyclopentenon-, substituierte Methyl-, Phthalimidomethyl-, Phenoxybenzyl, α-Cyanophenoxybenzyl- oder eine 4-Phenyl-3-chlor-but-2-enylgruppe ist.

5. Insektizid-Zusammensetzung gemäß Anspruch 4, dadurch gekennzeichnet, daß das Pyrethroid Pyrethrin, Cinerin, Josmolin, Furethrin, Allethrin, Cyclethrin, Bathrin, Dimethrin, Phthalthrin, Japothrin, Pyrestrin, Butethrin, Penothrin, Permethrin oder Decamethrin ist.

6. Insektizid-Zusammensetzung gemäß Anspruch 4 oder 5, dadurch gekennzeichnet, daß als Pyrethroid Permethrin verwendet wird.

7. Insektizid-Zusammensetzung gemäß Anspruch 4 oder 5, dadurch gekennzeichnet, daß als Pyrethroid Decamethrin verwendet wird.

8. Insektizid-Zusammensetzung gemäß einem oder mehreren wird Ansprüche 1 bis 3, dadurch gekennzeichnet, daß als Insektizid-Wirkstoff eine chlorierte Kohlenwasserstoffverbindung gemäß der allgemeinen Formel

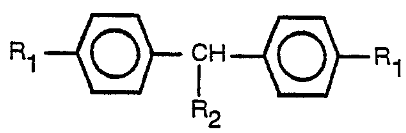

II

verwendet wird, worin

$R_1$ Halogen, Methoxy oder $C_1$—$C_3$-Alkyl und

$R_2$ Di- oder Trichlormethyl oder die Gruppe

$$-CH-(CH_2)_{1-2}-CH_3$$
$$NO_2$$

ist.

9. Insektizid-Zusammensetzung gemäß Anspruch 8, dadurch gekennzeichnet, daß als Insektizid 2,2-Bis-(p-chlorphenyl)-1,1,1-trichlorethan verwendet wird.

10. Insektizid-Zusammensetzung gemäß Anspruch 8, dadurch gekennzeichnet, daß als Insektizid 2,2-Bis-(p-methoxyphenyl)-1,1,1-trichlorethan verwendet wird.

11. Insektizid-Zusammensetzung gemäß Anspruch 8, dadurch gekennzeichnet, daß als Insektizid DFDT, TDE, Perthan, Bulan oder Prolan verwendet wird.

12. Insektizid-Zusammensetzung gemäß einem oder mehreren der Ansprüche 1 bis 3, dadurch gekennzeichnet, daß als Insektizid-Wirkstoff Chlordan, Heptachlor, Dihydroheptachlor, Isobenzan, Endosulfan oder Bromadan verwendet wird.

13. Insektizid-Zusammensetzung gemäß einem oder mehreren der Ansprüche 1 bis 3, dadurch gekennzeichnet, daß als Insektizid-Wirkstoff Lindan, Aldrin, Dieldrin oder Endrin verwendet wird.

14. Insektizid-Zusammensetzung gemäß einem oder mehreren der Ansprüche 1 bis 3, dadurch gekennzeichnet, daß als Insektizid-Wirkstoff ein Phosphorsäureester entsprechend der folgenden allgemeinen Formel

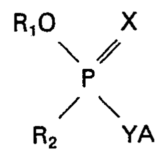

III

verwendet wird, worin

X und Y, die gleich oder verschieden sein können, Sauerstoff oder Schwefel sind,

$R_1$ Methyl oder Ethyl,

$R_2$ Methoxy oder Ethoxy,

A eine der folgenden Formeln darstellt

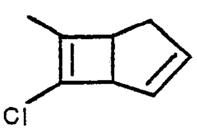

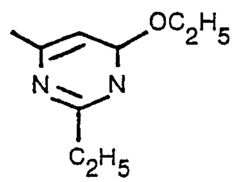

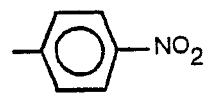

.

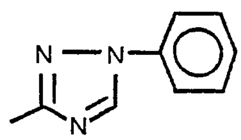

$-CH_2CONHCH_3$

15. Insektizid-Zusammensetzung gemäß Anspruch 14, dadurch gekennzeichnet, daß als Insektizid-Wirkstoff Demeton-O, Demeton-S, Disulfoton, Phorat, Terbufos, Ethion, Malthion, Dimethoat, Prothoat, Cyanathoat, Mecarbam, Phenthoat, Vamidothion, Dichlorvos, Mevinphos, Methacrifos, Phosphamidon, Dicrotophos, Chlorfenvinphos, Tetrachlorvinphos, Parathion, Fenitrothion, Fenchlorphos, Bromophos, Fenthion, Crufomat, Fonofos, Temephos, Diazinon, Pirimiphos, Chlorpyrifos, Quinalphos, Isoxathion, Triazophos, Isazofos, Phosmet, Azinphosmethyl, Phosalon, Methidathion, Azamethiphos, Menazon, Endothion, Benoxafos, Trichlorphon, Dioxathion, Phosfolan, Methamidophos, Phoxim, Heptenphos, Ethoprophos, Profenofos oder Merpafos verwendet wird.

16. Insektizid-Zusammensetzung gemäß Anspruch 14, dadurch gekennzeichnet, daß als Insektizid-Wirkstoff Heptenophos, Demeton-S-methyl, Oxydemeton-methyl, Etriumphos, Parathion oder Triazophos verwendet wird,

17. Insektizid-Zusammensetzung gemäß Anspruch 16, dadurch gekennzeichnet, daß als Insektizid-Wirkstoff Parathion verwendet wird.

18. Insektizid-Zusammensetzung gemäß einem oder mehreren der Ansprüche 1 bis 3, dadurch gekennzeichnet, daß als Insektizid-Wirkstoff ein Arylcarbamat entsprechend der folgenden allgemeinen Formel

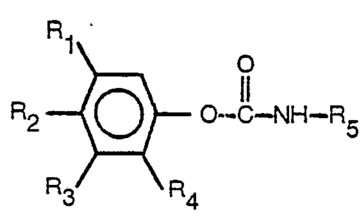

verwendet wird, worin

$R_1$ $CH_3$ oder H,

$R_2$ H, Dialkylamino, Dimethyl, Methyl oder Methylthio,

$R_3$ H, lineares oder verzweigtes $C_{1-5}$-alkyl oder Dimethylaminomethylimino,

$R_4$ H, $C_1$—$C_4$-alkyl, $C_1$—$C_4$-alkoxy, $C_1$—$C_4$-alkthio, Dioxolan oder Alkylthiomethyl,

zusätzlich zu Vorstehendem $R_3$ und $R_4$ zusammen auch eine der Gruppen —O $C(CH_3)_2$—O— oder —CH=CH—CH=CH— ist,

$R_5$ Methyl ist.

19. Insektizid-Zusammensetzung gemäß Anspruch 18, dadurch gekennzeichnet, daß als Insektizid-Wirkstoff Allyxycarb, Aminocarb, Bendiocarb, BPMC, Bufencarb, Carbaryl, Carbofuran, Dioxacarb, Ethiofencarb, Formetanat, Mercaptodimethur, Mexacarbat, MPMC oder Promecarb verwendet wird.

20. Insektizid-Zusammensetzung gemäß Anspruch 18, dadurch gekennzeichnet, daß als Insektizid-Wirkstoff Propoxur verwendet wird.

21. Insektizid-Zusammensetzung gemäß einem oder mehreren der Ansprüche 1 bis 3, dadurch gekennzeichnet, daß als Insektizid-Wirkstoff Aldicarb, Methomyl, Oxamyl, Cartap, Pirimicarb, Chlordimeform oder Amitraz verwendet wird.

22. Insektizid-Zusammensetzung gemäß einem oder mehreren der Ansprüche 1 bis 3, dadurch gekennzeichnet, daß als Insektizid-Wirkstoff Aldicarb verwendet wird.

23. Verfahren zur Herstellung der Insektizid-Zusammensetzung gemäß einem oder mehreren der Ansprüche 1 bis 22, dadurch gekennzeichnet, daß das Phospholipid in einem organischen Lösungsmittel oder einem Gemisch aus solchen Lösungsmitteln gelöst wird, das Insektizid in dieser Lösung gelöst wird, gegebenenfalls unter Erhitzen und Rühren, wonach das Lösungsmittel oder Lösungsmittelgemisch im Vakuum entfernt wird und das erhaltene Gemisch in eine übliche Formulierung nach Zugabe üblicher Füller und Hilfstoffe umgewandelt wird.

24. Verfahren zur Herstellung der Insektizid-Zusammensetzungen gemäß einem oder mehreren der Ansprüche 1 bis 22, dadurch gekennzeichnet, daß das oder die Insektizide in einem organischen Lösungsmittel zusammen mit einem oder mehreren Phospholipiden gelöst oder suspendiert wird und gegebenenfalls zusammen mit üblichen Füll- und Hilfsstoffen, wonach das Lösungsmittel abgetrennt wird.

25. Verfahren zur Herstellung der Insektizid-Zusammensetzungen gemäß einem oder mehreren der Ansprüche 1 bis 22, dadurch gekennzeichnet, daß ein oder mehrerer wasserlösliche oder alkohollösliche Insektizid-Wirkstoffe zusammen in Wasser oder Wasser/Alkhol-gemischen zusammen mit einem oder mehreren Phospholipiden gerührt und/oder mäßig erhitzt und/oder durch Anwendung von Ultraschallwellen gelöst wird, wonach das Lösungsmittel oder Lösungsmittel-gemisch entfernt wird.

26. Verwendung der Insektizid-Zusammensetzungen gemäß einem oder mehreren der Ansprüche 1 bis 22 zur Kontrolle von Insekten.